# EUROPÄISCHE PATENTSCHRIFT

(11) **EP 3 260 322 B1**
(45) Veröffentlichungstag und Bekanntmachung des Hinweises auf die Patenterteilung: **10.04.2019**
(21) Anmeldenummer: 17172427.1
(22) Anmeldetag: 23.05.2017
(51) Int. Cl.: B60K 13/04, F01N 13/18, F16F 1/387

(54) **ABGASANLAGE MIT EINER AUFHÄNGUNGSVORRICHTUNG ZUR BEFESTIGUNG AN EINER KAROSSERIE EINES AUTOMOBILS**
EXHAUST SYSTEM WITH A SUSPENSION SYSTEM FOR ATTACHING TO THE BODY OF AN AUTOMOBILE
SYSTÈME D'ÉCHAPPEMENT COMPRENANT UN DISPOSITIF DE SUSPENSION À FIXER SUR LA CARROSSERIE D'UNE AUTOMOBILE

(30) Priorität: 23.06.2016 DE 102016211273
(43) Veröffentlichungstag der Anmeldung: 27.12.2017
(73) Patentinhaber: VOLKSWAGEN AKTIENGESELLSCHAFT, 38440 Wolfsburg (DE)
(72) Erfinder: HEISER, Maik, 38100 Braunschweig (DE); HEBERLING, Achim, 38544 Weyhausen (DE); NOLL, Alexander, 36396 Steinau an der Straße (DE); HADWIGER, Daniela, 36396 Steinau an der Straße (DE); KALKHOF, Volker, 63571 Gelnhausen (DE)

(56) Entgegenhaltungen:
- DE-U1-202007 009 070
- JP-A- H0 828 259

## Beschreibung

Die Erfindung betrifft eine Abgasanlage mit einer Aufhängungsvorrichtung zur Befestigung an einer Karosserie eines Automobils gemäß dem Oberbegriff des Anspruchs 1.

Beim Betrieb von Brennkraftmaschinen entsteht unter anderem Abgas, das über eine Abgasanlage zielgerichtet entsorgt und abgeleitet wird. In Fahrzeugen werden Schwingungen der Brennkraftmaschine über Dämpfungselemente an einer direkten Übertragung auf die Karosserie des Fahrzeugs gehindert. Diese Schwingungsentkopplung erfolgt unter anderem über eine Aufhängungsvorrichtung der Abgasanlage. Durch diese Schwingungsentkopplungen haben die Insassen mehr Komfort beim Betrieb der Brennkraftmaschine.

Aus der EP 2 008 856 A2 ist eine schwingungsdämpfende Aufhängungsvorrichtung einer Abgasanlage bekannt. Die Schwingungen werden durch das Dämpfelement aufgefangen und die Halteelemente der Abgasanlage sind formschlüssig mit der Aufhängungsvorrichtung verbunden.

Die bekannten Abgasanlagen mit Aufhängungsvorrichtungen stellen eine sichere Befestigung und Schwingungsentkopplung für den allgemeinen Gebrauch eines Fahrzeugs und den Normalbetrieb dar. In Sondersituationen, wenn zum Beispiel ein Hindernis die Abgasanlage beim Überfahren berührt, kann die formschlüssige Verbindung zwischen dem Halteelement einer Abgasanlage und der Aufhängungsvorrichtung gelöst werden.

JPH08 28259 A offenbart eine Abgasanlage mit einer Aufhängungsvorrichtung zur Befestigung an einer Karosserie eines Automobils. Die Aufhängungsvorrichtung umfasst ein Dämpfelement und ein Halteelement, die formschlüssig miteinander verbindbar sind. Das Halteelement ragt durch das Dämpfelement hindurch, wobei auf einem durchragenden Teil des Haltelements ein Befestigungsteil anbringbar ist. Das Befestigungsteil und das Dämpfelement liegen formschlüssig ohne Abstand plan aneinander an.

Aufgabe der vorliegenden Erfindung ist es, eine Abgasanlage mit Aufhängungsvorrichtung zur Befestigung an einer Karosserie eines Automobils zu verbessern.

Diese Aufgabe wird erfindungsgemäß durch eine Abgasanlage mit einer Aufhängungsvorrichtung zur Befestigung an einer Karosserie eines Automobils gemäß Anspruch 1 gelöst. Vorteilhafte Ausführungsformen und Weiterentwicklungen der Erfindung sind in den abhängigen Ansprüchen charakterisiert.

Erfindungsgemäß ist eine Abgasanlage mit einer Aufhängungsvorrichtung zur Befestigung an einer Karosserie eines Automobils vorgesehen. Die Aufhängungsvorrichtung umfasst mindestens ein Dämpfelement und mindestens ein Halteelement. Das Dämpfelement und das Halteelement sind formschlüssig miteinander verbindbar. Bei einer formschlüssigen Verbindung ragt das Halteelement durch das Dämpfelement hindurch. Auf einem durchragenden Teil des Haltelements ist ein Befestigungsteil anbringbar. Die Form des Dämpfelements und des Befestigungsteils stehen dabei in einer besonderen Beziehung zueinander. Zumindest ein erster Abschnitt einer Form des Befestigungsteils ist komplementär zu einem zweiten Abschnitt einer Form des Dämpfelements ausgebildet. Das führt dazu, dass der erste und der zweite Abschnitt bei einer Verschiebung des Befestigungsteils in Richtung des Dämpfelements bis zur Berührung des Befestigungsteils und des Dämpfelements einen Formschluss bilden. Der erste Abschnitt der Form des Befestigungsteils ist konvex und der zweite Abschnitt der Form des Dämpfelements ist konkav. Das Befestigungsteil und das Dämpfelement zeigen in einer Schnittebene senkrecht zu einer Verschiebung des Befestigungsteils in Richtung des Dämpfelements eine ovale Abgrenzung ab. Zwischen dem Befestigungsteil und dem Dämpfelement besteht ein kontaktloser Abstand.
Auf vorteilhafte Weise wird ein Formschluss mit komplementären Körpern gebildet. Dadurch wird in der Sondersituation des berührenden Hindernisses ein Formschluss erwirkt, der die Befestigung besonders gut sichert. Bei einem Formschluss des Dämpfelements mit dem Befestigungsteil wird eine freie Drehung von dem Befestigungsteil und dem Dämpfelement verhindert. Zusätzlich wird auf vorteilhafte Weise im Falle des Formschlusses zwischen Dämpfelement und Befestigungsteil die Schwingungsentkopplung der Abgasanlage gesichert. Der kontaktlose Abstand sorgt auf vorteilhafte Weise dafür, dass die schwingungsdämpfenden Eigenschaften des Dämpfelements nicht durch eine vergrößerte Auflagefläche geändert werden. Durch den kontaktlosen Abstand ist es auf vorteilhafte Weise möglich die Übertragung eines Kraftmaximums bei einer Berührung zwischen der Abgasanlage und einem Hindernis auf die Aufhängungsvorrichtung zu verhindern. Wird die Abgasanlage von einem Hindernis berührt, kann die resultierende Kraft den Formschluss vom Befestigungsteil und dem Dämpfungselement bewirken. Die Kraft durch die Berührung zwischen dem Hindernis und der Abgasanlage wird aber innerhalb der zurückzulegenden Strecke des Abstands negiert beziehungsweise Läuft ins Leere. Die Kraft kann sich in diesem Streckenabschnitt nicht auf ein befestigtes Teil auswirken. Dadurch entsteht in diesem Abschnitt auf vorteilhafte Weise keine Belastung auf die Bauteile der Aufhängungsvorrichtung. Die Belastung auf die Aufhängungsvorrichtung wird so auf vorteilhafte Weise reduziert, während die schwingungsentkoppelnde Wirkung weiterhin besteht.

Diese erfindungsgemäße Ausgestaltung hat den Vorteil, dass das Halteelement mit dem angebrachten Befestigungsteil nicht mehr durch das Dämpfelement zurückgeschoben und demontiert werden kann. Bei der Berührung zwischen der Abgasanlage und einem Hindernis kann ein Ziehen an dem Halteelement in der Richtung weg von dem Dämpfelement entstehen. Dies führt zu einem erweiterten Formschluss aus dem Befestigungsteil und dem Dämpfelement. Durch die Berührung wirkt eine Kraft auf die Abgasanlage und schlussendlich auf das Halteelement. Wenn diese Kraft beispielsweise durch das Berühren eines Hindernisses mit der Abgasanlage ausgeübt wird, dann bleibt die Abgasanlage weiterhin schwingungsentkoppelt. Dadurch werden Strukturschäden am Automobil und der Abgasanlage verhindert. Durch das Befestigungsteil wird die Funktionstüchtigkeit im Ausnahmezustand gesichert und Schaden auf vorteilhafte Weise vermieden. Dabei bildet diese Konstruktion auch durch den kontaktlosen Abstand eine große Toleranz gegenüber fehlerhaft eingebauten Befestigungsteilen, was einen weiteren Vorteil darstellt. Denn die Schwingungsentkopplung wird im Normalbetrieb durch den Formschluss zwischen Halteelement und Dämpfungselement gewährleistet. Nur in der Sondersituation durch die genannte Berührung oder einer anderen Ursache der beschriebenen Kraft auf das Halteelement wird der erweiterte Formschluss des Befestigungsteils und des Dämpfelements benötigt und gebildet. Die Konstruktion erfüllt andernfalls im Normalbetrieb auch mit einem fehlerhaften Befestigungsteil oder ohne das Befestigungsteil ihren Zweck. Wobei mit Normalbetrieb die übliche Gebrauchsweise der Fahrzeuge meint. Dem gegenüber steht die Sondersituation, bei der ein Hindernis die Abgasanlage berührt.

Das Dämpfelement kann bevorzugt aus einem Kunststoff oder einem Gummi gefertigt sein. Auch ein anderes Material mit schwingungsdämpfenden Eigenschaften von vergleichbarer Stärke zu den genannten kann verwendet werden. Das Halteelement kann bevorzugt an der Abgasanlage mit einem Materialschluss befestigt sein. Zum Beispiel kann das Halteelement angelötet, angeschweißt oder genietet werden. Das Halteelement kann aber auch bevorzugt aus demselben Stück, wie der Abgasanlagenabschnitt gefertigt sein. Darüber hinaus kann das Halteelement bevorzugt zwei Wölbungen besitzen. Die Wölbungen können das Halteelement radial umlaufen. Zwischen den Wölbungen kann das Dämpfelement nach dem Hindurchstecken angeordnet sein. So können die Wölbungen eine Bewegung des Halteelements beim Schwingen der Abgasanlage verhindern, beispielsweise Bewegungen, die das Halteelement aus dem Dämpfelement herausziehen.

In einer vorteilhaften Weiterbildung der Erfindung kann das Befestigungsteil und das Dämpfelement so dimensioniert sein, dass sich eine Fläche des Befestigungsteils in einer Flächenprojektion auf eine Schnittebene senkrecht zu einer Durchragerichtung des Halteelements durch das Dämpfelement mit einer Fläche des Dämpfelements zumindest teilweise überdeckt.

Durch diese Dimensionierung wird auf vorteilhafte Weise sichergestellt, dass mit dem Befestigungsteil eine Kraftverteilung beim Formschluss zwischen Dämpfelement und Befestigungsteil realisiert wird. Dadurch wird auch ein Zurückschieben des Halteelements entgegen der Durchragerichtung des Halteelements durch das Dämpfelement verhindert.

In einer bevorzugten Weiterbildung können die ovalen Abgrenzungen komplementär zueinander verlaufen. Das heißt, dass das Befestigungsteil in dem Dämpfelement aufgenommen werden kann und diese Formen direkt aneinander anschließen. Bei diesem Formschluss besteht kein wesentlicher Abstand mehr zwischen dem Dämpfelement und dem Befestigungsteil. Durch diese Ausgestaltung würde dann eine mögliche Drehung des Befestigungsteils in dem Dämpfelement bei einem Formschluss vorteilhaft komplett ausgeschlossen werden.

In einer vorteilhafte Ausgestaltung der erfindungsgemäßen Vorrichtung besteht das Befestigungsteil aus mehr als einem Bauteil.

Durch die Ausgestaltung des Befestigungsteils als Einheit aus mehreren Bauteilen wird auf vorteilhafte Weise eine Anpassung des Befestigungsteils an das Halteelement und/oder das Dämpfelement ermöglicht. Beispielsweise können so die erfindungsgemäßen Befestigungsteile an der Abgasanlage mit einer Aufhängungsvorrichtung zur Befestigung an einer Karosserie nachträglich angebracht werden. Dadurch können die Teile als Nachrüstlösungen angeboten und verkauft werden. Die Montage und Demontage werden durch diesen Aufbau erleichtert. Es können beispielsweise Schraubbefestigungen benutzt werden, selbst wenn Bestandteile des Befestigungsteils nicht rotationssymmetrisch sind.

In einer vorteilhaften Weiterbildung der Erfindung kann das Befestigungsteil aus einem Bauteil bestehen.

In dieser Bauart sind die Befestigungsteile besonders gut zu montieren und zu demontieren. Sie können beispielsweise einhändig montiert und demontiert werden. Zusätzlich muss bei der Montage dieser Ausführungsform nur die Position von dem Dämpfelement, dem Halteelement und dem einteiligen Befestigungsteil beachtet werden. So ist beispielsweise eine automatisierte Montage mit Robotern einfacher zu realisieren.

Eine vorteilhafte Ausgestaltung der erfindungsgemäßen Vorrichtung beinhaltet, dass mindestens ein erstes Bauteil des Befestigungsteils mit dem Halteelement über einen Formschluss, einen Materialschluss oder einen Kraftschluss anbringbar ist.

Durch diese Ausgestaltung ist das Anbringen des Befestigungsteils am Halteelement vorteilhaft ermöglicht. In einer vorteilhaften Weitergestaltung der erfindungsgemäßen Vorrichtung kann die Form des anzubringenden Bauteils des Befestigungsteils an die Form des Halteelements angepasst sein und die beiden Teile können komplementär ausgeformt sein. So kann der Schluss zwischen dem Halteelement und dem Bauteil des Befestigungsteils besonders gut gestaltet und durchgeführt werden. So können beispielsweise in dem Halteelement Ausbuchtungen und Räume vorhanden sein, die bei einer Nietung einen besonders guten Nietabschnitt bilden.

In einer vorteilhaften Ausgestaltung der Erfindung ist es vorgesehen, dass mindestens ein erstes Bauteil des Befestigungsteils mindestens ein zweites Bauteil des Befestigungsteils über einen Formschluss, einen Materialschluss oder einen Kraftschluss mit dem Halteelement in einer Gesamtheit der Bauteile des Befestigungsteils im Wesentlichen fixiert.

Durch die Fixierung der Bauteile des Befestigungsteils zu einer Gesamtheit, wobei die Gesamtheit das Befestigungsteil bildet, werden auf vorteilhafte Weise Gruppenanordnungen ermöglicht, bei denen nicht jedes Bauteil des Befestigungsteils einzeln angebracht werden muss. Die Ausführungsform kann vorzugsweise so ausgestaltet sein, dass ein am Halteelement fixiertes Bauteil des Befestigungsteils mit einer umlaufenden Wölbung ausgestattet ist. Die Wölbung kann auch beim Fixieren entstehen. Ein Beispiel für eine Wölbung durch eine Fixierung wäre das Nieten. Zwischen der Wölbung und dem Halteelement können weitere Bauteile des Befestigungsteils angeordnet sein. Diese weiteren Bauteile können zum Beispiel auf das fixierte erste Bauteil aufgeschoben worden sein, bevor diese an dem Halteelement fixiert wurden. So könnte auf vorteilhafte Weise eine Gruppe von Bauteilen mit einer einzigen Verbindung in der gewünschten Position im Wesentlichen fixiert werden.

In einer vorteilhaften Ausgestaltung der erfindungsgemäßen Vorrichtung ist der erste Abschnitt als Schnittvolumen eines Ellipsoiden ausgebildet.

Durch die Ausgestaltung als ellipsoide Form ist der erste Abschnitt auf vorteilhafte Weise sowohl positionsstabiler, als auch in an die Form üblicher Dämpfelemente für Aufhängungsvorrichtungen von Abgasanlagen angepasst.

Weitere Vorteile und vorteilhafte erfindungsgemäße Ausführungsformen der Erfindung werden anhand der nachfolgenden Beschreibungen unter Bezugnahme auf die Figuren dargestellt.
Figur 1 ein Ausführungsbeispiel einer erfindungsgemäßen Abgasanlage mit einer Aufhängungsvorrichtung zur Befestigung an einer Karosserie,
Figur 2 Schnitt eines Ausführungsbeispiels einer erfindungsgemäßen Abgasanlage mit einer Aufhängungsvorrichtung zur Befestigung an einer Karosserie.

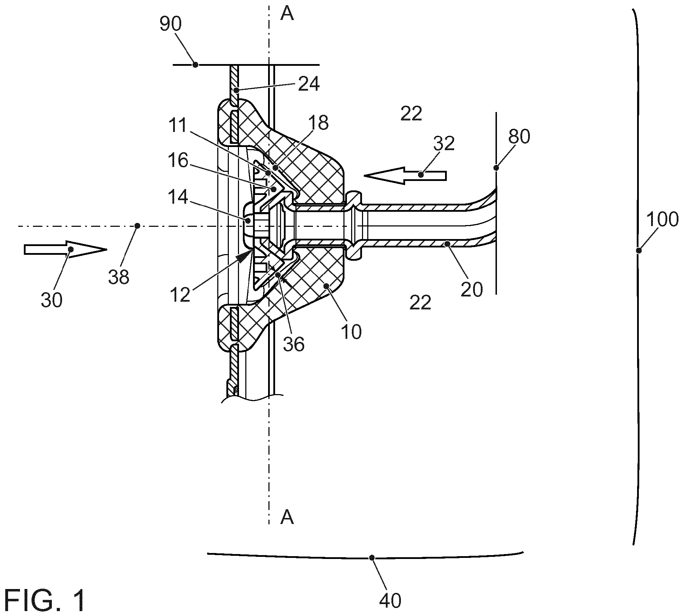

Figur 1 zeigt ein Ausführungsbeispiel einer erfindungsgemäßen Abgasanlage 80 mit einer Aufhängungsvorrichtung 40 zur Befestigung an einer Karosserie 90 eines Automobils 100. Die Aufhängungsvorrichtung 40 besteht aus dem Halteelement 20 das durch ein Dämpfelement 10 hindurchragt und mit einem Befestigungsteil 12 an einem Ausknüpfen aus dem Dämpfelement 10 gehindert wird. Das Dämpfelement 10 ist in einem Rahmen 24 der Aufhängungsvorrichtung 40 untergebracht. Der Rahmen 24 ist an der Karosserie des Automobils 100 befestigt. Das Halteelement 20 ist mit einem Ende an der Abgasanlage 80 befestigt. Das andere Ende ist durch das Dämpfelement 10 in einer Durchragerichtung 32 hindurchgesteckt. Das Halteelement 20 ist innen hohl und hat zwei umlaufende Wölbungen 22, die im Wesentlichen für eine feste Positionierung des Halteelements 20 im Dämpfelement 10 sorgen. Die umlaufenden Wölbungen 22 verhindern ein freies Hin- und Herbewegen des Halteelements 20 während der Schwingungen durch den motorischen Betrieb. Der Hohlraum des Halteelements 20 ist auf vorteilhafte Weise geformt um eine Vernietung des zweiten Bauteils 16 an dem Halteelement 20 zu erlauben.

Auf dem in Durchragerichtung 32 hindurchgesteckten Ende des Halteelements 20 ist in diesem Ausführungsbeispiel ein zweiteiliges Befestigungsteil 12 installiert. Das erste Bauteil 14 des Befestigungsteils 12 ist in diesem Ausführungsbeispiel mit dem Halteelement 20 vernietet und fixiert so das zweite Bauteil 16 des Befestigungsteils 12 in einer Position gehalten wird. Das zweite Bauteil 16 ist im ersten Abschnitt des Befestigungsteils 12 als Schnittvolumen eines Ellipsoiden ausgebildet. Durch die Form des zweiten Bauteils 16 des Befestigungsteils 12 ist eine Rotation auf der Rotationsachse 38 ausgeschlossen. In einer Flächenprojektion auf eine Schnittebene 34 senkrecht zu der Durchragerichtung 32 des Halteelements 20 wird die Fläche des Dämpfelements 10 zumindest teilweise von der Fläche des Befestigungsteils 12 überdeckt.

Durch diese Ausführung besteht in einer Richtung 30 ein kontaktloser Abstand 36, bevorzugt fester Abstand 36, zwischen dem Befestigungsteil 12 und dem Dämpfelement 10. Dieser Abstand 36 verhindert auf vorteilhafte Weise, dass die Dämpfeigenschaften des Dämpfelements 12 durch eine veränderte Kontaktfläche beeinflusst werden. Im Fall einer Berührung zwischen der Abgasanlage 80 und einem Hindernis kann in dieser erfindungsgemäßen Ausführungsform der Erfindung eine Ausknüpfung des Halteelements 20 in der Richtung 30 verhindert werden. Dies erfolgt durch einen Formschluss zwischen dem ersten Abschnitt 11 des Befestigungsteils 12 und dem zweiten Abschnitt 18 des Dämpfelements 10. Der erste Abschnitt 11 und der zweite Abschnitt 18 sind komplementär zueinander geformt und bilden bei Berührung besonders vorteilhaft einen Formschluss. Durch diese Ausbildung wird vorteilhaft verhindert, dass die Mobilität des Automobils 100 durch Schäden an der Karosserie 90 oder der Abgasanlage 80 eingeschränkt wird.

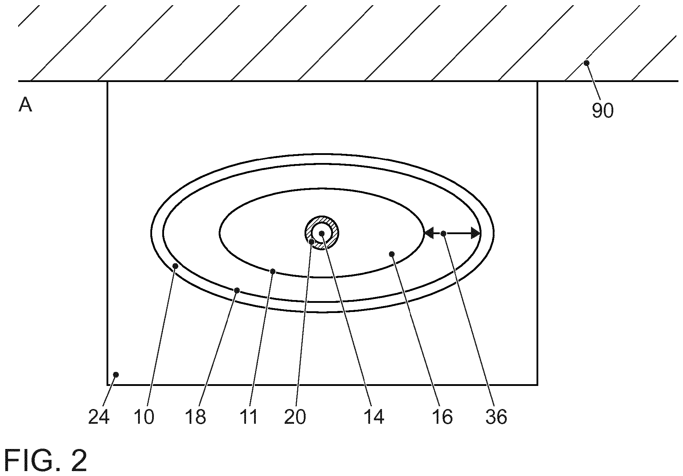

Die Figur 2 zeigt einen Schnitt durch die Schnittebene 34. Der Rahmen 24 der Aufhängungsvorrichtung 40 ist an der Karosserie 90 befestigt und trägt das Dämpfelement 10. Zwischen dem ersten Abschnitt 11 auf dem zweiten Bauteil 16 des Befestigungsteils 12 und dem zweiten Abschnitt 18 des Dämpfelements 10 besteht ein Abstand 36. Die komplementären Ausformungen des ersten Abschnittes 11 und des zweiten Abschnitts 18 sind deutlich zu erkennen. Durch das Halteelement 20 ist das erste Bauteil 14 des Befestigungsteils 12 gesteckt. Das zweite Bauteil 16 des Befestigungsteils 12 ist um das Halteelement 20 herum angeordnet. Im Falle der oben beschriebenen Berührung zwischen einem Hindernis und der Abgasanlage 80 würde der Abstand bis zum Kontakt verringert.

### BEZUGSZEICHENLISTE

- 10: Dämpfelement
- 11: erster Abschnitt
- 12: Befestigungsteil
- 14: erstes Bauteil
- 16: zweites Bauteil
- 18: zweiter Abschnitt
- 20: Halteelement
- 22: Wölbung
- 24: Rahmen
- 30: Richtung
- 32: Durchragerichtung
- 34: Schnittebene
- 36: Abstand
- 38: Rotationsachse
- 40: Aufhängungsvorrichtung
- 80: Abgasanlage
- 90: Karosserie
- 100: Automobil

## Patentansprüche

1. Abgasanlage (80) mit einer Aufhängungsvorrichtung (40) zur Befestigung an einer Karosserie (90) eines Automobils (100), wobei die Aufhängungsvorrichtung (40) mindestens ein Dämpfelement (10) und mindestens ein Halteelement (20) umfasst, das Dämpfelement (10) und das Halteelement (20) formschlüssig miteinander verbindbar sind und bei einer formschlüssigen Verbindung das Halteelement (20) durch das Dämpfelement (10) hindurchragt, wobei auf einem durchragendenTeil des Halteelements (20) ein Befestigungsteil (12) anbringbar ist,
dass zumindest ein erster Abschnitt (11) einer Form des Befestigungsteils (12) komplementär zu einem zweiten Abschnitt (18) einer Form des Dämpfelements (10) ausgebildet ist und der erste Abschnitt (11) und der zweite Abschnitt (18) bei einer Verschiebung der Abgasanlage (80) in Richtung der Aufhängungsvorrichtung (40) bis zur Berührung des Befestigungsteils (12) und des Dämpfelements (10) einen Formschluss bilden,
**dadurchgekennzeichnet,**
dass der erste Abschnitt (11) der Form des Befestigungsteils (12) konvex ist und der zweite Abschnitt (18) der Form des Dämpfelements (10) konkav ist, dass das Befestigungsteil (12) und das Dämpfelement (10) in einer Schnittebene senkrecht zu einer Verschiebung des Befestigungsteils (12) in Richtung (30) des Dämpfelements (10) eine ovale Abgrenzung abzeichnen und dass zwischen dem Befestigungsteil (12) und dem Dämpfelement (10) ein kontaktloser Abstand (36) besteht.

2. Abgasanlage (80) mit einer Aufhängungsvorrichtung (40) nach Anspruch 1,
**dadurchgekennzeichnet,**
dass sich eine Fläche des Befestigungsteils (12) in einer Flächenprojektion auf eine Schnittebene senkrecht zu einer Durchragerichtung (32) des Halteelements (20) durch das Dämpfelement (10) mit einer Fläche des Dämpfelements (10) zumindest teilweise überdeckt.

3. Abgasanlage (80) mit einer Aufhängungsvorrichtung (40) nach Anspruch 1,
**dadurchgekennzeichnet,**
dass das Befestigungsteil (12) aus mehr als einem Bauteil besteht.

4. Abgasanlage (80) mit einer Aufhängungsvorrichtung (40) nach Anspruch 1,
**dadurchgekennzeichnet,**
dass das Befestigungsteil (12) aus einem Bauteil besteht.

5. Abgasanlage (80) mit einer Aufhängungsvorrichtung (40) nach Anspruch 3,
**dadurchgekennzeichnet,**
dass mindestens ein erstes Bauteil (14) des Befestigungsteils (12) mit dem Halteelement (20) über einen Formschluss, einen Materialschluss oder einen Kraftschluss verbindbar ist.

6. Abgasanlage (80) mit einer Aufhängungsvorrichtung (40) nach Anspruch 3,
**dadurchgekennzeichnet,**
dass mindestens ein erstes Bauteil (14) des Befestigungsteils (12) mindestens ein zweites Bauteil (16) des Befestigungsteils (12) über einen Formschluss, einen Materialschluss oder einen Kraftschluss mit dem Halteelement (20) in einer Gesamtheit der Bauteile des Befestigungsteils (12) im Wesentlichen fixiert.

7. Abgasanlage (80) mit einer Aufhängungsvorrichtung (40) nach Anspruch 1,
**dadurchgekennzeichnet,**
dass der erste Abschnitt (11) als Schnittvolumen eines Ellipsoiden ausgebildet ist.

## Claims

1. Exhaust gas system (80) having a suspension apparatus (40) for fastening to a vehicle body (90) of a car (100), the suspension apparatus (40) comprising at least one damping element (10) and at least one holding element (20), it being possible for the damping element (10) and the holding element (20) to be connected to one another in a positively locking manner and, in the case of a positively locking connection, the holding element (20) penetrating through the damping element (10), it being possible for a fastening part (12) to be attached on a penetrating part of the holding element (20), in that at least one first section (11) of a form of the fastening part (12) is of complementary configuration with respect to a second section (18) of a form of the damping element (10), and the first section (11) and the second section (18) form a positively locking connection in the case of a displacement of the exhaust gas system (80) in the direction of the suspension apparatus (40) as far as contact of the fastening part (12) and the damping element (10), **characterized in that** the first section (11) of the form of the fastening part (12) is convex, and the second section (18) of the form of the damping element (10) is concave, **in that**, in a sectional plane perpendicularly with respect to a displacement of the fastening part (12) in the direction (30) of the damping element (10), the fastening part (12) and the damping element (10) outline an oval delimitation, and **in that** there is a contact-free spacing (36) between the fastening part (12) and the damping element (10).

2. Exhaust gas system (80) having a suspension apparatus (40) according to Claim 1, **characterized in that** a surface of the fastening part (12) overlaps at least partially with a surface of the damping element (10) in a surface projection onto a sectional plane perpendicularly with respect to a penetration direction (32) of the holding element (20) through the damping element (10).

3. Exhaust gas system (80) having a suspension apparatus (40) according to Claim 1, **characterized in that** the fastening part (12) consists of more than one component.

4. Exhaust gas system (80) having a suspension apparatus (40) according to Claim 1, **characterized in that** the fastening part (12) consists of one component.

5. Exhaust gas system (80) having a suspension apparatus (40) according to Claim 3, **characterized in that** at least one first component (14) of the fastening part (12) can be connected to the holding element (20) via a positively locking connection, an integrally joined connection or a non-positive connection.

6. Exhaust gas system (80) having a suspension apparatus (40) according to Claim 3, **characterized in that** at least one first component (14) of the fastening part (12) substantially fixes at least one second component (16) of the fastening part (12) via a positively locking connection, an integrally joined connection or a non-positive connection to the holding element (20) as a whole of the components of the fastening part (12).

7. Exhaust gas system (80) having a suspension apparatus (40) according to Claim 1, **characterized in that** the first section (11) is configured as a sectional volume of an ellipsoid.

## Revendications

1. Système d'échappement (80) comprenant un dispositif de suspension (40) à fixer sur une carrosserie (90) d'une automobile (100), le dispositif de suspension (40) comprenant au moins un élément d'amortissement (10) et au moins un élément de retenue (20), l'élément d'amortissement (10) et l'élément de retenue (20) pouvant être reliés l'un à l'autre par complémentarité de forme et, en cas de liaison par complémentarité de forme, l'élément de retenue (20) traversant l'élément d'amortissement (10), une pièce de fixation (12) pouvant être montée sur une partie traversante de l'élément de retenue (20),
en ce qu'au moins une première partie (11) présente la forme de la pièce de fixation (12) étant réalisée de manière complémentaire à une deuxième partie (18) présentant la forme de l'élément d'amortissement (10), et la première partie (11) et la deuxième partie (18) formant un engagement par complémentarité de forme lors d'un déplacement du système d'échappement (80) en direction du dispositif de suspension (40) jusqu'au contact de la pièce de fixation (12) et de l'élément d'amortissement (10),
**caractérisé en ce que**
la première partie (11) présentant la forme de la pièce de fixation (12) est convexe et la deuxième partie (18) présentant la forme de l'élément d'amortissement (10) est concave, **en ce que** la pièce de fixation (12) et l'élément d'amortissement (10) dessinent une délimitation ovale dans un plan de coupe perpendiculaire à un déplacement de la pièce de fixation (12) en direction (30) de l'élément d'amortissement (10), et **en ce qu'**une distance (36) sans contact existe entre la pièce de fixation (12) et l'élément d'amortissement (10).

2. Système d'échappement (80) comprenant un dispositif de suspension (40) selon la revendication 1,
**caractérisé en ce**
**qu'**une surface de la pièce de fixation (12) dans une projection de surface sur un plan de coupe perpendiculaire à une direction de traversée (32) de l'élément de retenue (20) à travers l'élément d'amortissement (10) recouvre au moins partiellement une surface de l'élément d'amortissement (10).

3. Système d'échappement (80) comprenant un dispositif de suspension (40) selon la revendication 1,
**caractérisé en ce que**
la pièce de fixation (12) est constituée de plus d'un composant.

4. Système d'échappement (80) comprenant un dispositif de suspension (40) selon la revendication 1,
**caractérisé en ce que**
la pièce de fixation (12) est constituée d'un composant.

5. Système d'échappement (80) comprenant un dispositif de suspension (40) selon la revendication 3,
**caractérisé en ce**
**qu'**au moins un premier composant (14) de la pièce de fixation (12) peut être relié à l'élément de retenue (20) par le biais d'un engagement par complémentarité de forme, d'une liaison de matière ou d'un engagement par force.

6. Système d'échappement (80) comprenant un dispositif de suspension (40) selon la revendication 3,
**caractérisé en ce**
**qu'**au moins un premier composant (14) de la pièce de fixation (12) fixe sensiblement au moins un deuxième composant (16) de la pièce de fixation (12) par le biais d'un engagement par complémentarité de forme, d'une liaison de matière ou d'un engagement par force avec l'élément de retenue (20) dans un ensemble des composants de la pièce de fixation (12).

7. Système d'échappement (80) comprenant un dispositif de suspension (40) selon la revendication 1,
**caractérisé en ce que**
la première partie (11) est réalisée sous forme de volume de coupe d'une ellipsoïde.
